# EUROPEAN PATENT APPLICATION

(11) **EP 2 899 788 A1**
(43) Date of publication of application: **29.07.2015**
(21) Application number: 13839520.7
(22) Date of filing: 06.09.2013
(51) Int. Cl.: H01M 8/04, H01M 8/06, H01M 8/12

(54) **FUEL CELL SYSTEM**

(30) Priority: 19.09.2012 JP 2012205408
(71) Applicant: Konica Minolta, Inc., Tokyo 100-7015 (JP)
(72) Inventor: NODA Atsuhiro, Tokyo 100-7015 (JP)
(74) Representative: Hoffmann Eitle
(86) International application number: PCT/JP2013/074017
(87) International publication number: WO 2014/045894

(57) **Abstract**

A fuel cell system comprises: a fuel generating member that generates a fuel gas by a chemical reaction; a fuel cell part that generates power using the fuel gas supplied from the fuel generating member; a gas passage for circulating the gas between the fuel generating member and the fuel cell part; a circulator that is provided in the gas passage and forces the gas to circulate between the fuel generating member and the fuel cell part; and a circulator control unit that controls the amount of gas circulated by the circulator in accordance with the percentage of non-chemical reaction in the fuel generating member.

## Description

### Technical Field

The present invention relates to a fuel cell system equipped with a fuel generating member.

### Background Art

In a fuel cell, a cell typically has a structure where a solid polyelectrolyte membrane which employs a solid polymer ion exchange membrane, a solid oxide electrolyte membrane which employs yttria-stabilized zirconia (YSZ), or the like is sandwiched between a fuel electrode (anode) and an oxidant electrode (cathode). Such a cell is further provided with a fuel gas passage to supply a fuel gas (hydrogen, for example) to the fuel electrode and an oxidant gas passage to supply an oxidant gas (oxygen or air, for example) to the oxidant electrode, and power generation is performed with the fuel gas and the oxidant gas supplied through these passages to the fuel electrode and the oxidant electrode, respectively.

The fuel cell is theoretically capable of generating electric energy with high efficiency, it contributes to saving energy, and the fuel cell also provides a highly eco-friendly power generating method, and thus the fuel cell is expected as a very powerful solution to energy and environmental problems on the global scale.

### Citation List

### Patent Literature

[Patent Literature 1] Japanese Unexamined Patent Application Publication No. H11-501448
[Patent Literature 2] WO2012/043271
[Patent Literature 3] JP-A-2006-73316

### Summary of Invention

### Technical Problem

Patent Literature 1 and Patent Literature 2 each disclose a secondary battery type fuel cell system where a solid oxide type fuel cell and a hydrogen generating member that generates hydrogen by an oxidation reaction and is recoverable by a reduction reaction are used in combination. In such a secondary battery type fuel cell system, the hydrogen generating member generates hydrogen during a power generating operation of the system and is recovered during a charging operation of the system.

Examples of a configuration of such a hydrogen generating member include one in which particulates a base material of which is a metal that generates hydrogen by an oxidation reaction and is recoverable by a reduction reaction, for example, are packed together with gaps left between them to allow gas to pass therethrough, and one in which a large number of pellet-shaped particles each formed of such particulates as mentioned just above are packed in a space.

The oxidation reaction that takes place when the hydrogen generating member generates hydrogen is accompanied by increase in volume of the particulates. First, at a surface of the hydrogen generating member, expansion of the particulates is caused by the oxidation reaction between the particulates and the oxidation gas. According as the oxidation of the hydrogen generating member progresses, the oxidation reaction takes place between an inner portion of the hydrogen generating member and the oxidation gas, but then, the expanded particulates prevents the oxidation gas from penetrating into the hydrogen generation member.

Thus, in the secondary battery type fuel cell system, if a gas circulation amount between the solid oxide type fuel cell and the hydrogen generating member is set to a constant value, when the constant value is a large value, the gas circulation amount becomes larger than necessary when oxidation of the hydrogen generating member has not progressed very much, and energy is wasted to drive a circulator; in contrast, when the constant value is a small value, the gas circulation amount becomes too small when the oxidation of the hydrogen generating member has much progressed, and the too small gas circulation amount causes shortage of power generation amount of the fuel cell portion.

Patent Literature 3 discloses use of a fuel cell in a cogeneration system. In the system disclosed in Patent Literature 3, the amount of fuel gas supplied to the fuel cell is controlled by means of a fuel control valve, and the system is not one where gas is circulated, and thus has a disadvantage that it is necessary to collect unreacted fuel gas.

In view of the situation described above, an object of the present invention is to provide a fuel cell system capable of generating power with high energy efficiency and in a stable manner.

### Solution to Problem

In order to achieve the above object, a fuel cell system according to the present invention includes a fuel generating member that generates a fuel gas by a chemical reaction; a fuel cell portion that performs power generation by using the fuel gas supplied from the fuel generating member; a gas passage for circulating gas between the fuel generating member and the fuel cell portion; a circulator disposed in the gas passage to forcibly circulate gas between the fuel generating member and the fuel cell portion; and a circulator controlling portion that controls a gas circulation amount of the circulator according to a proportion of the fuel generating member that has not undergone the chemical reaction.

### Advantageous Effects of Invention

According to the fuel cell system of the present invention, since the gas circulation amount of the circulator is controlled according to the proportion of the fuel generating member that has not undergone the chemical reaction, it is possible to prevent the gas circulation amount of the circulator from becoming larger than necessary to waste energy to drive the circulator when the proportion of the fuel generating member that has not undergone the oxidation reaction is large, and it is also possible to eliminate an inconvenience such that the gas circulation amount of the pump 8 becomes so small that the fuel cell portion generates insufficient amount of power when the proportion of the fuel generating member that has not undergone the chemical reaction is small. That is, according to the fuel cell system of the present invention, it is possible to achieve stable power generation with high energy efficiency.

### Brief Description of the Drawings

FIG. 1 is a schematic diagram showing an overall configuration of a fuel cell system according to an embodiment of the present invention;
FIG. 2 is a schematic diagram showing an example of a fuel generating member and a container in which the fuel generating member is held;
FIG. 3 is a schematic diagram showing another example of the fuel generating member;
FIG. 4 is a diagram showing how oxidation of the fuel generating member progresses;
FIG. 5 is a diagram showing a relationship between a proportion of the fuel generating member that has not undergone an oxidation reaction, a gas circulation amount of a pump, and an amount of hydrogen generated from the fuel generating member;
FIG. 6 is a diagram showing an example of how a power consumption amount varies in a household;
FIG. 7 is a diagram showing a pre-adjustment gas circulation amount;
FIG. 8 is a diagram showing a post-adjustment gas circulation amount; and
FIG. 9 is a diagram showing a gas circulation amount under a servo control.

### Description of Embodiments

Embodiments of the present invention will be described below with reference to accompanying drawings. It should be understood that the present invention is not limited to the following embodiments.

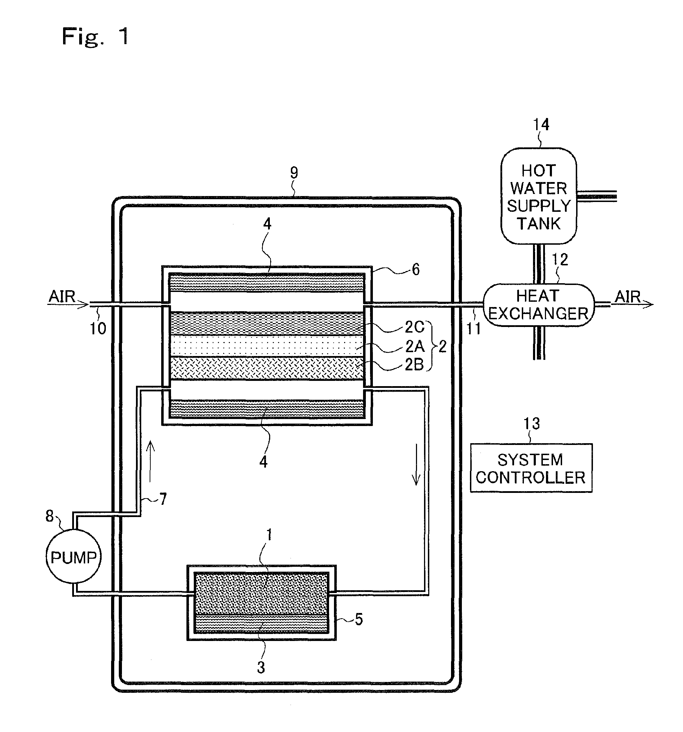

An overall configuration of the fuel cell system according to one embodiment of the present invention is shown in FIG. 1. The fuel cell system according to the present embodiment represents an example where the present invention is applied to a household fuel cell cogeneration system, but it should be understood that the fuel cell system according to the present invention is not limited to a cogeneration system.

The fuel cell system according to the present embodiment includes a fuel generating member 1, a fuel cell portion 2, a heater 3 that heats the fuel generating member 1, a heater 4 that heats the fuel cell portion 2, a container 5 in which the fuel generating member 1 and the heater 3 are held, a container 6 in which the fuel cell portion 2 and the heater 4 are held, a pipe 7 for circulating gas between the fuel generating member 1 and a fuel cell portion 2, a pump 8 that forcibly circulates gas between the fuel generating member 1 and the fuel cell portion 2, a heat insulation container 9, a pipe 10 for supplying air to an air electrode 2C of the fuel cell portion 2, a pipe 11 for discharging air from the air electrode 2C of the fuel cell portion 2, a heat exchanger 12, and a system controller 13 that controls the whole system. The heat insulation container 9 holds therein the containers 5 and 6, and part of each of the pipes 7, 10, and 11. For simplicity of figures, members such as power lines for transmitting power and control lines for transmitting control signals are not illustrated in the figures. There may further be provided, as necessary, temperature sensors or the like around, for example, the fuel generating member 1 and the fuel cell portion 2. Further, the pump 8 may be replaced with any of other circulators such as a compressor, a fan, and a blower.

Examples of members that may be used as the fuel generating member 1 include one that is formed by adding a metal or a metal oxide to a surface of a metal base material and generates a fuel gas (hydrogen, for example) by an oxidation reaction with an oxidation gas (water vapor, for example) and is recoverable by a reduction reaction with a reduction gas (hydrogen, for example). Examples of the metal forming the metal base material include, for example, Ni, Fe, Pd, V, Mg, and an alloy of any of these metals, and in particular, Fe is preferable because of its low cost and workability. Examples of the added metal include Al, Rh, Pd, Cr, Ni, Cu, Co, V, and Mo, and examples of the added metal oxide include SiO₂ and TiO₂. It should be noted that the metal forming the metal base material and the metal to be added are not the same. In the present embodiment, as the fuel generating member 1, there is used a fuel generating member that is formed mainly of Fe.

The fuel generating member that is mainly formed of Fe is able to generate hydrogen as a fuel gas (reduction gas) by consuming water vapor as an oxidation gas through the oxidation reaction shown by formula (1) below.

4H₂O + 3Fe → 4H₂ + Fe₃O₄ (1)

Along with progress of the oxidation reaction of Fe shown by formula (1) above, conversion of iron into iron oxide progresses to gradually reduce a remaining amount of iron, but through a reverse reaction of the reaction indicated by formula (1), that is, the reduction reaction indicated by formula (2) below, it is possible to recover the fuel generating member 1. Note that the oxidation reaction of Fe indicated by formula (1) above and the reduction reaction of formula (2) below are both able to be performed even at a low temperature such as a temperature lower than 600°C.

4H₂+ Fe₃O₄ → 3Fe + 4H₂O (2)

For higher reactivity, it is desirable that the fuel generating member 1 have a large surface area per unit volume. One possible way of increasing the surface area of the fuel generating member 1 per unit volume is, for example, to break the main material of the fuel generation unit 1 into particulates and mold the particulates into the fuel generating member 1. Examples of methods for making such particulates include a method of crushing by means of a ball mill. Moreover, the surface area of the particulates may be further increased by generating cracks by means of, for example, a mechanical method, or alternatively, the surface area of the particulates may be further increased by roughening the surface of the particulates by means of a method such as acid treatment, alkali treatment, and blasting.

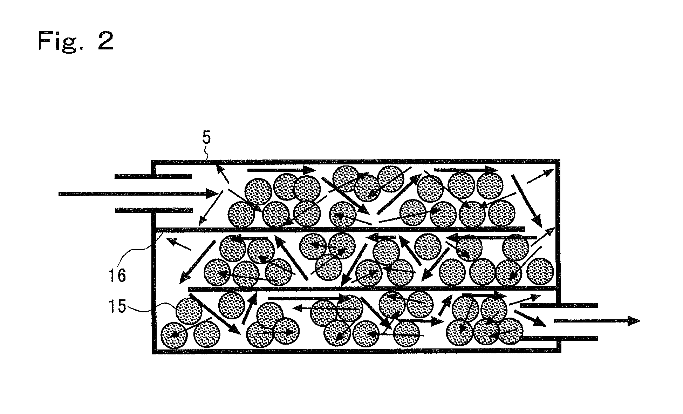

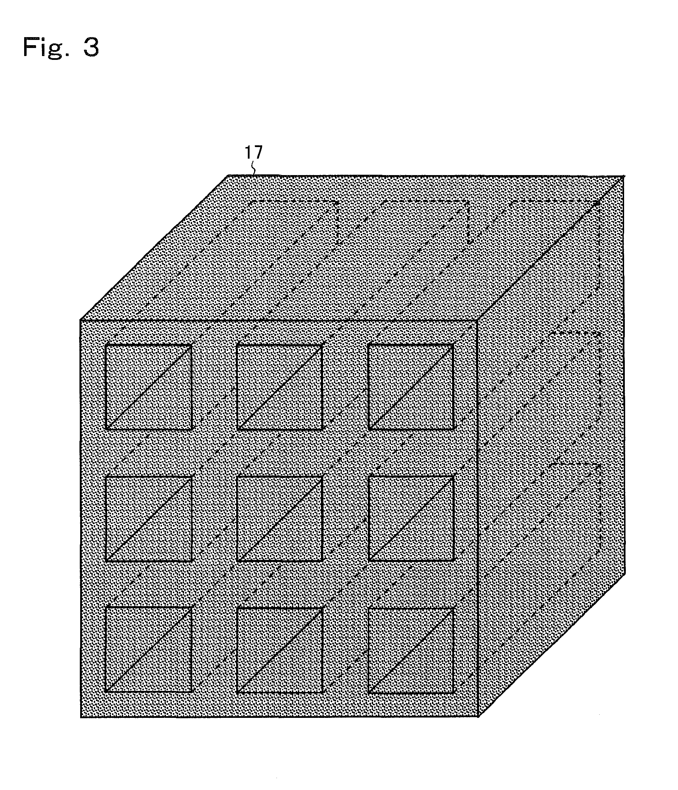

The fuel generating member 1 may be, for example, one in which a large number of pellet-shaped particles each formed of particulates are packed in a space, or one in which particulates are packed together with gaps left therebetween to allow gas to pass therethrough. The former example is shown in FIG. 2 and the latter example is shown in FIG. 3.

In FIG. 2, the fuel generating member 1 is configured with a plurality of spherical pellets 15, and the container 5 is provided with a partition panel 16 for lengthening the gas passage. In FIG. 2, gas flow directions are schematically indicated by arrows. The pellets shown in FIG. 2 are each spherical in shape, but the pellets may be shaped otherwise than spherical.

In FIG. 3, the fuel generating member 1 is configured with a molded body 17 having gas passages formed therein. In the example shown in FIG. 3, the gas passages are each shaped square in section, but the gas passages may be shaped otherwise than that. For example, if the gas passages are formed to have a regular-hexagonal sectional shape, a honeycomb-structured molded body is obtained.

The fuel cell portion 2 is, as shown in FIG. 1, a membrane electrode assembly (MEA) formed by joining a fuel electrode 2B and an air electrode 2C, which is an oxidant electrode, respectively to one and the other side of an electrolyte membrane 2A. It should be noted that, instead of disposing only one MEA as shown in FIG. 1, a plurality of MEAs may be disposed, or further, the plurality of MEAs may be arranged into a laminate structure.

As a material of the electrolyte membrane 2A, for example, a solid oxide electrolyte using yttria-stabilized zirconia (YSZ) may be used, or, for example, a solid polyelectrolyte such as Nafion (a trademark of E. I. du Pont de Nemours & Co.), a cation conductive polymer, and an anion conductive polymer may be used; however, the material of the electrolyte membrane 2A is not limited to these materials, and any material may be used as long as it has all the characteristics required to be the electrolyte of the fuel cell, such as a material that transmits hydrogen ions, a material that transmits oxygen ions, and a material that transmits hydroxide ions, for example. The present embodiment employs, as the electrolyte membrane 2A, an electrolyte that transmits oxygen ions or hydroxide ions, such as a solid oxide electrolyte using yttria-stabilized zirconia (YSZ), for example.

The electrolyte membrane 2A is able to be produced by using, for example, a chemical vapor deposition-electrochemical vapor deposition (CVD-EVD) method in a case where a solid oxide electrolyte is employed, and in the case where a solid polyelectrolyte is employed, the electrolyte membrane 2A is able to be produced by using, for example, a coating method.

The fuel electrode 2B and the air electrode 2C may each have a configuration, for example, that includes a catalyst layer in contact with the electrolyte membrane 2A and a diffusion electrode laid on the catalyst layer. As the catalyst layer, for example, there may be used one that is formed of carbon black supporting platinum black or a platinum alloy thereon. As a material of the diffusion electrode of the fuel electrode 2B, carbon paper, an Ni-Fe cermet, an Ni-YSZ cermet, etc. may be used, for example. As a material of the diffusion electrode of the air electrode 2C, carbon paper, an La-Mn-O compound, an La-Co-Ce compound, etc. may be used, for example. The fuel electrode 2B and the air electrode 2C are each able to be formed, for example, by using a vapor-deposition method or the like.

The following descriptions will deal with a case where hydrogen is used as the fuel gas.

During power generation performed by the fuel cell system according to the present embodiment, the fuel cell portion 2 is electrically connected to an external load (not shown) through control by the system controller 13. In the fuel cell portion 2, the reaction of formula (3) below takes place at the fuel electrode 2B during the power generation performed by the secondary battery type fuel cell system according to the present embodiment.

H₂ + O²⁻ → H₂O + 2e⁻ (3)

Electrons generated by the reaction of formula (3) moves to pass through the external load (not shown) and reach the air electrode 2C, where the electrons cause the reaction indicated by formula (4) below.

1/2O₂ + 2e⁻ → O²⁻ (4)

Then, oxygen ions generated through the reaction of formula (4) above move to pass through the electrolyte membrane 2A, and reach the fuel electrode 2B. By repeating the above series of reactions, the fuel cell portion 2 performs a power generation operation. As is clear from formula (3) above, during the power generation operation of the fuel cell system according to the present embodiment, H₂ is consumed and H₂O is generated at the fuel electrode 2B side.

From formulae (3) and (4) above, the reaction that takes place at the fuel cell portion 2 during the power generation operation of the fuel cell system according to the present embodiment is as indicated by formula (5) below.

H₂ + 1/2O₂ → H₂O (5)

On the other hand, through the oxidation reaction shown by formula (1) above, the fuel generating member 1 generates H₂ by consuming the H₂O generated at the fuel electrode 2B side of the fuel cell portion 2 during the power generation of the fuel cell system according to the present embodiment.

Along with progress of the oxidation reaction of Fe shown by formula (1) above, conversion of iron into iron oxide progresses to gradually reduce the remaining amount of iron, but through the reduction reaction shown by formula (2) above, it is possible to recover the fuel generating member 1 and to charge the fuel cell system according to the present embodiment.

During a charging operation of the fuel cell system according to the present embodiment, the fuel cell portion 2 is electrically connected to an external power supply (not shown) through control by the system controller 13. During the charging operation of the fuel cell system according to the present embodiment, at the fuel cell portion 2, the electrolysis reaction indicated by formula (6) below, which is a reverse reaction of the reaction of formula (5) above, takes place to consume H₂O and generate H₂ at the fuel electrode 2B side, and, at the fuel generating member 1, the reduction reaction shown by formula (2) above takes place to consume the H₂ generated at the fuel electrode 2B side of the fuel cell portion 2 and generate H₂O.

H₂O → H₂ + 1/2O₂ (6)

The heat exchanger 12 heats water by using heat obtained from gas discharged from the air electrode 2C of the fuel cell portion 2 to pass through the pipe 11. The water heated by the heat exchanger 12 is stored in the hot-water supply tank 14 as hot water to be supplied.

The system controller 13 performs control of the whole system, including, for example, control of switching between the power generation operation and the electrolysis operation of the fuel cell portion 2, control of a gas circulation amount of the pump 8, etc.

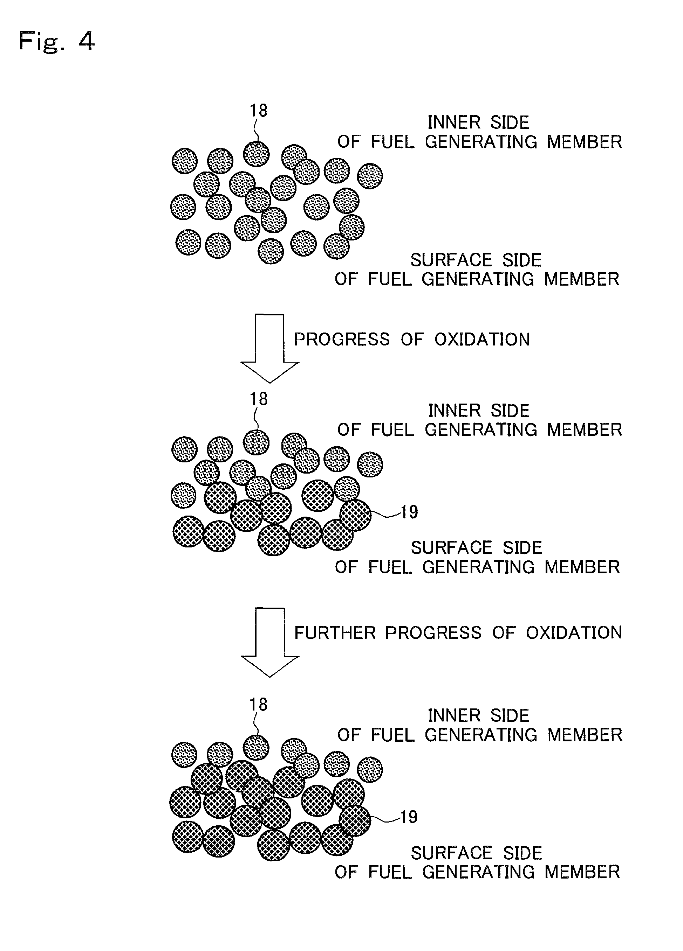

When H₂O is supplied to the fuel generating member 1 when the proportion of the fuel generating member 1 that has not undergone the oxidation reaction is 1 (which is equivalent to 100%), that is, when H₂O is supplied to the fuel generating member 1 that has not been oxidized at all, first, at a surface of the fuel generating member 1 (for example, surfaces of the pellets 15 shown in FIG. 2 or surfaces of the gas passages in the molded body 17 shown in FIG. 3), the iron particulates 18 is converted to iron dioxide particulates 19 and expanded through the oxidation reaction with the H₂O. According as the oxidation of the fuel generating member 1 progresses, the oxidation reaction takes place in an inner portion of the fuel generating member 1, but the expansion of the particulates helps prevent the H₂O from penetrating further into the fuel generating member 1 (see FIG. 4).

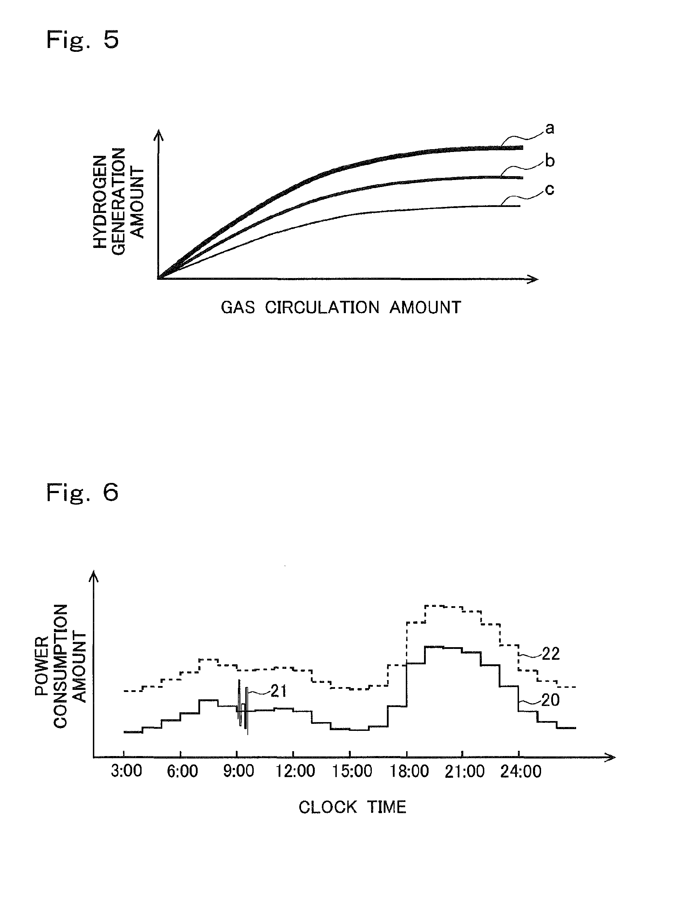

Thus, when the oxidation of the fuel generating member 1 progresses to decrease the proportion of the fuel generating member 1 that has not undergone the oxidation reaction (a remaining amount of iron), the H₂O is prevented from penetrating further into the fuel generating member 1, and accordingly, a hydrogen generation amount at the fuel generating member 1 decreases. (See FIG. 5: Graphs in FIG. 5 show three cases having different remaining amounts of iron, where a thickest solid line (a) indicates a case with the largest remaining amount of iron, and a thinnest solid line (c) indicates a case with the smallest remaining amount of iron. Under the same gas circulation amount, the hydrogen generation amount is the largest in the case with the largest remaining amount of iron, and the smallest in the case with the smallest remaining amount of iron.) However, if the gas circulation amount of the pump 8 is increased, it promotes the penetration of H₂O into the fuel generating member 1, and thus, in whichever of the graphs (a - c) indicating the cases of the different remaining amounts of iron, the hydrogen generation amount at the fuel generating member 1 increases (see FIG. 5).

The system controller 13 controls the gas circulation amount of the pump 8, taking the relationship shown in FIG. 5 into consideration. Next, descriptions will be given of specific examples of the gas circulation amount control.

### <First Example of Gas Circulation Amount Control>

Here, an example of how a power consumption amount varies in a household is shown in FIG. 6. Graphs of an average power consumption amount have different shapes depending on factors such as family makeup and life style, but they can show somewhat similar patterns in some season, some day of the week, and some time zone. In graph 20 of average power consumption amounts shown in FIG. 6, hourly averages of the power consumption amount are plotted, for example. Graph 21 of actual power consumption amounts can vary greatly in a short term of about several minutes as partly indicated as an example in FIG. 6, in response to turning on/off of household electrical equipment, that is, with variation of load.

The system controller 13 determines, based on the average power consumption amount in a household, an amount of power for each of unit time periods associated with clock time when the power supply to the household should be covered by power generation by the fuel cell portion 2, that is, a predicted power demand value for each of the unit time periods associated with clock time. In this example, values of graph 22 each obtained by adding a value equivalent to an increase of power consumption amount resulting from variation in load in the household to a corresponding one of the values of graph 20 of the average power consumption amounts shown in FIG. 6, are used as predicted power demand values for the unit time periods associated with clock time in a time zone when the fuel cell portion 2 performs the power generation operation. Simulations, statistical data, etc. may be used for the average power consumption amounts in the household and the variation in load in the household. However, from a viewpoint of improving the accuracy of the predicted power demand value for each unit time period associated with clock time, it is preferable to measure the average power consumption amounts in the household and the variation in load in the household by providing a detector that detects the average power consumption amounts and the variation in load in the household, or physical values related thereto.

A hydrogen consumption amount in each of the unit time periods when the fuel cell portion 2 performs power generation corresponding to the predicted power demand value for each of the unit time periods depends on a discharge current of the fuel cell portion 2 corresponding to the predicted power demand value for each of the unit time periods associated with clock time. The system controller 13, assuming that the proportion of the fuel generating member 1 that has not undergone the oxidation reaction (the remaining amount of iron) is constant, obtains a value of the gas circulation amount necessary for the fuel cell portion 2 to perform power generation corresponding to the predicted power demand value for each of the unit time periods associated with clock time, that is, a predicted necessary gas circulation amount value for each of the unit time periods associated with clock time, from the hydrogen consumption amount in each of the unit time periods when the fuel cell portion 2 performs power generation corresponding to the predicted power demand value for each of the unit time periods and the relationship between the gas circulation amount of the pump 8 and the hydrogen generation amount at the fuel generating member 1 shown in FIG. 5. Here, the relationship between the gas circulation amount of the pump 8 and the hydrogen generation amount at the fuel generating member 1 shown in FIG. 5 is data when the temperature of the fuel generating member 1 is at a predetermined temperature. A partial pressure ratio between H₂ and H₂O contained in circulating gas varies with the temperature of the fuel generating member 1, and thus it is desirable to adjust the relationship between the gas circulation amount of the pump 8 and the hydrogen generation amount at the fuel generating member 1 shown in FIG. 5 according to the temperature of the fuel generating member 1. Moreover, it is preferable to store data relating to the relationship between the gas circulation amount of the pump 8 and the hydrogen generation amount at the fuel generating member 1 shown in FIG. 5 and data related to the adjustment in accordance with the temperature of the fuel generating member 1, in an internal memory of the system controller 13 in advance.

Likewise, in the electrolysis operation of the fuel cell portion 2, a water vapor consumption amount in each of the unit time periods when the fuel cell portion 2 performs electrolysis corresponding to a predicted power supply value for each of the unit time periods is determined from an electrolysis current of the fuel cell portion 2 corresponding to the predicted power supply value for each of the unit time periods associated with clock time. Then, on the assumption that the proportion of the fuel generating member 1 that has not undergone the oxidation reaction (the remaining amount of iron) is constant, a value of the gas circulation amount necessary for the fuel cell portion 2 to perform electrolysis corresponding to the predicted power supply value for each of the unit time periods associated with clock time, that is, a predicted necessary gas circulation amount value for each of the unit time periods associated with clock time, is obtained from a water vapor consumption amount in each of the unit time periods when the fuel cell portion 2 performs electrolysis corresponding to the predicted power supply value for each of the unit time periods and the relationship between the gas circulation amount of the pump 8 and the water vapor generation amount at the fuel generating member 1.

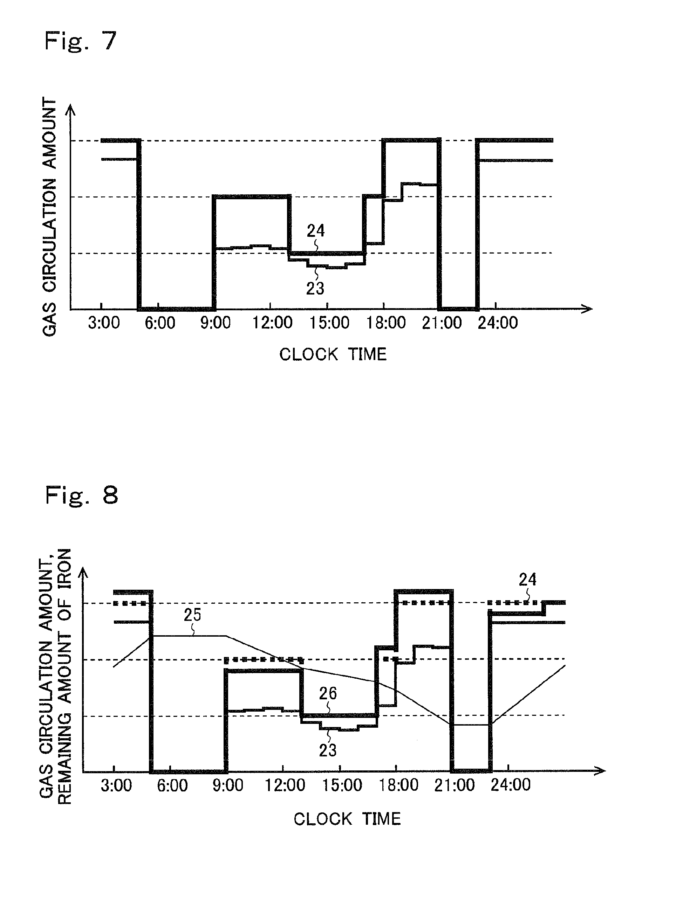

FIG. 7 is a diagram showing an example of setting of the gas circulation amount in a case where the fuel generating member 1 is recovered by causing the fuel cell portion 2 to perform electrolysis by using midnight power and the fuel cell portion 2 is caused to perform power generation during the day. In the example shown in FIG. 7, the fuel cell portion 2 performs the power generation operation in the time zone from 9:00 to 21:00, and in the other time zones, power is supplied to the load in the household from, for example, a power system. Moreover, in the example shown in FIG. 7, the fuel cell portion 2 performs the electrolysis operation in the time zone from 23:00 to 5:00. The system controller 13 obtains graph 24 of pre-adjustment gas circulation amount such that graph 24 is above graph 23 of predicted necessary gas circulation amount value for each of the unit time periods associated with clock time. In the example shown in FIG. 7, the pre-adjustment gas circulation amount is selected from four levels including a zero level.

Furthermore, the system controller 13 obtains the proportion of the fuel generating member 1 that has not undergone the oxidation reaction (the remaining amount of iron) at each clock time. For example, an integrated value of a power generation current is obtained from the predicted power demand value, and, based on the obtained integrated value of the generated current, an oxidized amount of the fuel generating member 1 is obtained. Also, an integrated value of electrolysis current is obtained from the predicted power supply value, and, based on the obtained integrated value of electrolysis current, a reduced amount of the fuel generating member 1 is obtained. A detector that detects a current flowing in the fuel cell portion 2 may be provided to measure the integrated value of the power generation current and the integrated value of electrolysis. Or, a detector that detects a weight of the fuel generating member 1 may be provided to detect the oxidized amount and the reduced amount based on weight variation. Further, in a case where the fuel generating member 1 is iron as in the present embodiment, a detector that detects magnetic permeability of the fuel generating member 1 may be provided to obtain the oxidized amount and the reduced amount of the fuel generating member 1 based on variation in the magnetic permeability. Here, the detectors mentioned above may be disposed inside the fuel cell system, or may be disposed outside the fuel cell system.

The system controller 13 adjusts the above-mentioned pre-adjustment gas circulation amount according to the proportion of the fuel generating member 1 that has not undergone the oxidation reaction (the remaining amount of iron), and determines a post-adjustment gas circulation amount, that is, a final gas circulation amount. In the present embodiment, in a time zone when the fuel cell portion 2 is performing the power generation operation, when the proportion of the fuel generating member 1 that has not undergone the oxidation reaction (the remaining amount of iron) is equal to or larger than a first threshold value, a value acquired by multiplying the pre-adjustment gas circulation amount by a first coefficient (<1) is used as a post-adjustment gas circulation amount, and when the proportion of the fuel generating member 1 that has not undergone the oxidation reaction (the remaining amount of iron) is equal to or smaller than a second threshold value (< the first threshold value), a value acquired by multiplying the pre-adjustment gas circulation amount by a second coefficient (>1) is used as the post-adjustment gas circulation amount. Thus, when the proportion of the fuel generating member 1 that has not undergone the oxidation reaction is large, volume expansion of the iron particulates is small, which makes it easy for gas to penetrate into the fuel generating member 1, and thus, adjustment is performed such that the gas circulation amount does not become larger than necessary. In contrast, when the proportion of the fuel generating member 1 that has not undergone the oxidation reaction is small, the volume expansion of the iron particulates is large, which makes it difficult for gas to penetrate into the fuel generating member 1, and thus, adjustment is performed such that the gas circulation amount becomes large.

On the other hand, in a time zone when the fuel cell portion 2 is performing the electrolysis operation, when the proportion of the fuel generating member 1 that has not undergone the oxidation reaction (the remaining amount of iron) is equal to or larger than the first threshold value, a value acquired by multiplying the pre-adjustment gas circulation amount by a third coefficient (> 1) is used as the post-adjustment gas circulation amount, and when the proportion of the fuel generating member 1 that has not undergone the oxidation reaction (the remaining amount of iron) is equal to or smaller than the second threshold value (< the first threshold value), a value acquired by multiplying the pre-adjustment gas circulation amount by a fourth coefficient (< 1) is used as the post-adjustment gas circulation amount.

As described above, in the power generation operation and the electrolysis operation of the fuel cell portion 2, the gas circulation amount is adjusted in opposite directions in terms of increase and decrease.

Here, the first coefficient and the fourth coefficient may be the same or different from each other, and the second coefficient and the third coefficient may be the same or different from each other. FIG. 8 shows graph 25 of the proportion of the fuel generating member 1 that has not undergone the oxidation reaction (the remaining amount of iron) and graph 26 of the final gas circulation amount.

As described above, in the present example, in the electrolysis operation of the fuel cell portion 2, the gas circulation amount is adjusted in opposite directions in terms of increase and decrease. This is because, in the electrolysis operation, when the remaining amount of iron is large (that is, when a remaining amount of iron oxide is small), an amount of a target material (iron oxide) to be reduced is small, a large amount of gas needs to be circulated to promote the reduction reaction. In contrast, when the remaining amount of iron is small (that is, when the remaining amount of iron oxide is large), the amount of the target material to be reduced is large, and thus it is conceivable that the reduction reaction takes place to a sufficient level without circulating a very large amount of gas. Thus, in the present example, in the electrolysis operation of the fuel cell portion 2, the gas circulation amount is controlled according to the amount of the reduction-target material (iron oxide).

In the electrolysis operation, as well as in the power generation operation, of the fuel cell portion 2, control may be performed according to volume increase of the iron particulates of the fuel generating member 1. That is, in a case where the proportion of the fuel generating member 1 that has not undergone the oxidation reaction (the remaining amount of iron, in other words, a proportion of the fuel generating member 1 that has undergone the reduction reaction) is large, the adjustment may be performed in the direction of decreasing the gas circulation amount, and in a case where the proportion of the fuel generating member 1 that has not undergone the oxidation reaction (the remaining amount of iron) is small, the adjustment may be performed in the direction of increasing the gas circulation amount.

Moreover, in the present example, both in the power generation operation and in the electrolysis operation, the system controller 13 adjusts the gas circulation amount in the above described manners, but in a time zone when the fuel cell portion 2 is performing the electrolysis operation, it may be such that the system controller 13 does not adjust the gas circulation amount. In contrast to the power generation operation during the day, the electrolysis operation is able to be performed comparatively slowly in the night time hours, and thus, in some cases, it is not always necessary to control the gas circulation amount for a higher charging efficiency.

The fuel cell portion 2 may be one that is equipped with the power generating function alone. In that case, when the remaining amount of iron of the fuel generating member 1 becomes small, the fuel generating member 1 needs to be replaced with a new one.

By adjusting the gas circulation amount as described above, it is possible to prevent the gas circulation amount of the pump 8 from becoming larger than necessary to waste energy to drive the pump 8 when the proportion of the fuel generating member 1 that has not undergone the oxidation reaction (the remaining amount of iron) is large, and it is also possible to eliminate an inconvenience such that the gas circulation amount of the pump 8 becomes so small that the fuel cell portion generates insufficient amount of power when the proportion of the fuel generating member 1 that has not undergone the chemical reaction (the remaining amount of iron) is small. Thus, it is possible to achieve stable power generation with high energy efficiency.

Here, in the example shown in FIG. 7, for the purpose of restricting excessive driving of the pump 8 to avoid wasteful power consumption and noise, the pre-adjustment gas circulation amount is set to the smallest circulation amount that exceeds the predicted necessary gas circulation amount value. However, if the unit time period is set longer, it will increase the possibility of temporary shortage of the fuel gas due to variation in power in a period shorter than the unit time period. To prevent this, instead of setting the pre-adjustment gas circulation amount to the smallest value that exceeds the predicted necessary gas circulation amount value, the pre-adjustment gas circulation amount may be set to be equal to or larger than 1.5 times the predicted necessary gas circulation amount value. In this case, the average power consumption amount itself may be used as the predicted power demand value for each of the unit time periods associated with clock time.

### <Second Example of Gas Circulation Amount Control>

In the above-described first example, the system controller 13 determines the amount of power to be generated at the fuel cell portion 2 and the gas circulation amount of the pump 8 based on the predicted power demand value for each of the unit time periods associated with clock time. In contrast, in the present example, the system controller 13 performs real-time control of the gas circulation amount of the pump 8 based on real-time power demand in a time zone when the fuel cell portion 2 performs the power generation operation.

In the present example, the system controller 13 performs servo control of the gas circulation amount of the pump 8 according to the power generation amount of the fuel cell portion 2 when the fuel cell portion 2 performs power generation corresponding to an actual power consumption amount in the household. Thus, if the actual power consumption amount in the household increases, the gas circulation amount of the pump 8 increases according to the increase, and if the actual power consumption amount in the household decreases, the gas circulation amount of the pump 8 decreases according to the decrease.

Since the actual power consumption amount in the household can change greatly in a short term of about several minutes (see graph 21 of actual power consumption amounts in FIG. 6), the servo control by the system controller 13 is required to control the gas circulation amount of the pump 8 to follow the actual power consumption amount in the household, responding quickly even when the actual power consumption amount in the household varies in a short period of time.

Accuracy of the servo control is improved by performing not only proportional control but also control using integral values, differential values, etc. with respect to the gas circulation amount (target value of the servo control) that is necessary for the fuel cell portion 2 to perform power generation corresponding to the actual power consumption amount in the household.

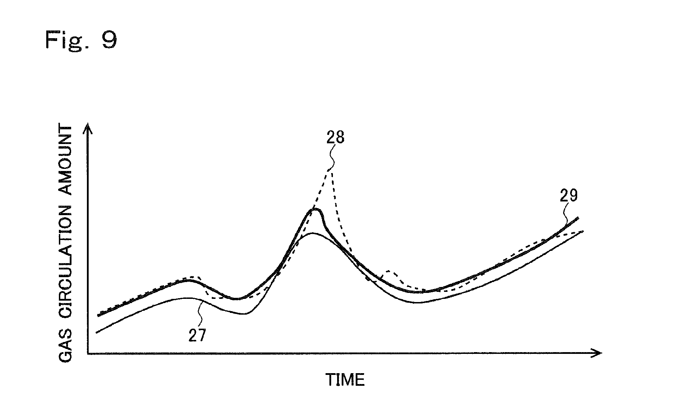

However, in a case where the actual power consumption amount varies greatly in a short term, an error occurs under ordinary servo control, and in graph 28 of the gas circulation amount under the ordinary servo control, phase delay, overshoot, etc. are caused with respect to graph 27 of target gas circulation amounts (see FIG. 9). This results mainly from the fact that, although the hydrogen generation amount of the fuel generating member 1 continues to change, the change of the hydrogen generation amount of the fuel generating member 1 is not taken into consideration in the ordinary servo control.

The error mentioned above leads to generation of insufficient amount of power by the fuel cell portion 2 and to degraded energy efficiency due to the pump 8 being caused to circulate gas more than necessary. One possible way of preventing insufficient power generation by the fuel cell portion 2 is to set a large allowance amount beforehand, but it is clear that this requires an accordingly larger amount of energy for the pump 8 and degrades the energy efficiency.

Thus, in the present example, the system controller 13 obtains the proportion of the fuel generating member 1 that has not undergone the oxidation reaction (the remaining amount of iron). For example, a detector that detects a current flowing in the fuel cell portion 2 is provided, the integrated value of the power generation current and the integrated value of the electrolysis current are measured, an amount of oxidization of the fuel generating member 1 is obtained based on the integrated value of the power generation current, the integrated value of the electrolysis current is obtained from the predicted power supply value, and an amount of reduction of the fuel generating member 1 is obtained based on the integrated value of the electrolysis current.

Moreover, in the present example, the system controller 13 sets a value in accordance with a reciprocal of the proportion of the fuel generating member 1 that has not undergone the oxidation reaction (the remaining amount of iron) as a gain of the servo control. Thereby, it is possible to set an optimal servo gain in accordance with the proportion of the fuel generating member 1 that has not undergone the oxidation reaction (the remaining amount of iron) at each clock time.

Execution of the servo control of the present example makes it possible to always achieve optimal servo control regardless of time zones, and thus graph 29 of the gas circulation amount under the servo control of the present example includes only a small error with respect to graph 27 of the target gas circulation amount (see FIG. 9). Thereby, it is possible to prevent the gas circulation amount of the pump 8 from becoming larger than necessary to waste energy to drive the pump 8 when the proportion of the fuel generating member 1 that has not undergone the oxidation reaction (the remaining amount of iron) is large, and it is also possible to eliminate an inconvenience such that the gas circulation amount of the pump 8 becomes so small that the fuel cell portion generates insufficient amount of power when the proportion of the fuel generating member 1 that has not undergone the chemical reaction (the remaining amount of iron) is small. Thus, it is possible to achieve stable power generation with high energy conversion efficiency.

Here, the gas circulation amount necessary for the fuel cell portion 2 to perform power generation corresponding to the actual power consumption amount in the household (the target value of the servo control) may be set to a minimum gas circulation amount necessary for the fuel cell portion 2 to perform power generation corresponding to the actual power consumption amount in the household, for the purpose of restricting excessive driving of the pump 8 and preventing waste of power and noise; however, it is preferable to set, as the target value, a value obtained by adding a predetermined allowance to the minimum gas circulation amount necessary for the fuel cell portion 2 to perform power generation corresponding to the actual power consumption amount in the household.

### < Conclusion>

The fuel cell system described above includes a fuel generating member that generates a fuel gas by a chemical reaction, a fuel cell portion that performs power generation by using the fuel gas supplied from the fuel generating member, a gas passage for circulating gas between the fuel generating member and the fuel cell portion, a circulator disposed in the gas passage to forcibly circulate gas between the fuel generating member and the fuel cell portion, and a circulator controlling portion that controls a gas circulation amount of the circulator according to a proportion of the fuel generating member that has not undergone the chemical reaction (first configuration).

Moreover, in the fuel cell system of the first configuration, a proportion of the fuel generating member that has not undergone the chemical reaction may be calculated based on a current value of the fuel cell portion (second configuration).

Moreover, in the fuel cell system of the first or second configuration, the circulator controlling portion may control the gas circulation amount of the circulator to be small when the proportion of the fuel generating member that has not undergone the chemical reaction is large, and control the gas circulation amount of the circulator to be large when the proportion of the fuel generating member that has not undergone the chemical reaction is small (third configuration).

Moreover, in the fuel cell system of the third configuration, the circulator controlling portion may control the gas circulation amount of the circulator to be smaller than a gas circulation amount necessary to fulfil a desired power generation amount when the proportion of the fuel generating member that has not undergone the chemical reaction is equal to or larger than a first threshold value, and the circulator controlling portion may control the gas circulation amount of the circulator to be larger than the gas circulation amount necessary to fulfil the desired power generation amount when the proportion of the fuel generating member that has not undergone the chemical reaction is equal to or smaller than a second threshold value which is smaller than the first threshold value (fourth configuration).

Moreover, in the fuel cell system of the fourth configuration, the circulator controlling portion may determine the gas circulation amount necessary to fulfil the desired power generation amount based on a hydrogen consumption amount in power generation performed corresponding to the desired power generation amount and a gas circulation amount necessary to supply hydrogen to fulfil the hydrogen consumption amount (fifth configuration).

Moreover, in the fuel cell system of the fourth configuration, the desired power generation amount may be a power generation amount corresponding to a predicted power demand value for each of unit time periods associated with clock time, and the circulator controlling portion may control the gas circulation amount before being controlled according to the proportion of the fuel generating member that has not undergone the chemical reaction so that the gas circulation amount before being controlled according to the proportion of the fuel generating member that has not undergone the chemical reaction becomes equal to or larger than a predicted necessary gas circulation amount value for each of the unit time periods associated with clock time that is necessary to fulfill a power generation amount corresponding to the predicted power demand value for each of the unit time periods associated with clock time (sixth configuration).

Moreover, in the fuel cell system of the first or second configuration, the circulator controlling portion may perform servo control of the gas circulation amount of the circulator with a gain value in accordance with a reciprocal of the proportion of the fuel generating member that has not undergone the chemical reaction (seventh configuration).

Moreover, the fuel cell system of any one of the first to seventh configurations may be such that the fuel generating member is recoverable by a reverse reaction of the chemical reaction, the fuel cell portion has an electrolysis function of electrolyzing a product of the reverse reaction supplied thereto from the fuel generating member when the fuel generating member is recovered, and, during the electrolysis, the circulator controlling portion controls the gas circulation amount of the circulator according to a proportion of the fuel generating member that has not undergone the reverse reaction (eighth configuration).

Moreover, the fuel cell system of any one of the first to eight configuration may be such that the fuel generating member is formed of particulates, and a base material of the particulates is a metal that generates a fuel gas by the chemical reaction (ninth configuration).

According to these fuel cell systems, since the gas circulation amount of the circulator is controlled according to the proportion of the fuel generating member that has not undergone the chemical reaction, it is possible to prevent the gas circulation amount of the circulator from becoming larger than necessary to waste energy to drive the circulator when the proportion of the fuel generating member that has not undergone the oxidation reaction is large, and it is also possible to eliminate an inconvenience such that the gas circulation amount of the circulator becomes so small that the fuel cell portion generates an insufficient amount of power when the proportion of the fuel generating member that has not undergone the chemical reaction is small. That is, according to the above-described fuel cell systems, it is possible to achieve stable power generation with high energy efficiency.

### List of Reference Signs

- 1: fuel generating member
- 2: fuel cell portion
- 2A: electrolyte membrane
- 2B: fuel electrode
- 2C: air electrode 2C
- 3, 4: heater
- 5, 6: container
- 7, 10, 11: pipe
- 8: pump
- 9: heat insulation container
- 12: heat exchanger
- 13: system controller
- 14: hot-water supply tank
- 15: pellet
- 16: partition panel
- 17: molded body
- 18: iron particulate
- 19: iron oxide particulate
- 20: graph of average power consumption amount
- 21: graph of actual power consumption amount
- 22: graph of power consumption amount including amount equivalent to increase due to variation in household load
- 23: graph of predicted necessary gas circulation amount value for each of time periods associated with clock time
- 24: graph of pre-adjustment gas circulation amount
- 25: graph of proportion of fuel generating member that has not undergone oxidation reaction
- 26: graph of final gas circulation amount
- 27: graph of target gas circulation amount
- 28: graph of gas circulation amount under ordinary servo control
- 29: graph of gas circulation amount under servo control of second example

## Claims

1. A fuel cell system, comprising:
a fuel generating member that generates a fuel gas by a chemical reaction;
a fuel cell portion that performs power generation by using the fuel gas supplied from the fuel generating member;
a gas passage for circulating gas between the fuel generating member and the fuel cell portion,
a circulator disposed in the gas passage to forcibly circulate gas between the fuel generating member and the fuel cell portion; and
a circulator controlling portion that controls a gas circulation amount of the circulator according to a proportion of the fuel generating member that has not undergone the chemical reaction.

2. The fuel cell system according to claim 1,
wherein
the proportion of the fuel generating member that has not undergone the chemical reaction is calculated based on a current value of the fuel cell portion.

3. The fuel cell system according to claim 1 or 2,
wherein
the circulator controlling portion controls the gas circulation amount of the circulator to be small when the proportion of the fuel generating member that has not undergone the chemical reaction is large, and
the circulator controlling portion controls the gas circulation amount of the circulator to be large when the proportion of the fuel generating member that has not undergone the chemical reaction is small.

4. The fuel cell system according to claim 3,
wherein,
when the proportion of the fuel generating member that has not undergone the chemical reaction is equal to or larger than a first threshold value, the circulator controlling portion controls the gas circulation amount of the circulator to be smaller than a gas circulation amount necessary to fulfill a desired power generation amount, and
when the proportion of the fuel generating member that has not undergone the chemical reaction is equal to or smaller than a second threshold value which is smaller than the first threshold value, the circulator controlling portion controls the gas circulation amount of the circulator to be larger than the gas circulation amount necessary to fulfill the desired power generation amount.

5. The fuel cell system according to claim 4,
wherein
the circulator controlling portion determines the gas circulation amount necessary to fulfill the desired power generation amount based on a hydrogen consumption amount in power generation performed corresponding to the desired power generation amount and a gas circulation amount necessary to supply hydrogen to fulfill the hydrogen consumption amount.

6. The fuel cell system according to claim 4,
wherein
the desired power generation amount is a power generation amount corresponding to a predicted power demand value for each of unit time periods associated with clock time, and
the circulator controlling portion controls the gas circulation amount before being controlled according to the proportion of the fuel generating member that has not undergone the chemical reaction so that the gas circulation amount before being controlled according to the proportion of the fuel generating member that has not undergone the chemical reaction becomes equal to or larger than a predicted necessary gas circulation amount for each of the unit time periods associated with clock time, the predicted necessary gas circulation amount for each of the unit time periods associated with clock time being a gas circulation amount necessary to fulfill a power generation amount corresponding to the predicted power demand value for each of the unit time periods associated with clock time.

7. The fuel cell system according to claim 1 or 2,
wherein
the circulator controlling portion performs servo control of the gas circulation amount of the circulator with a gain value in accordance with a reciprocal of the proportion of the fuel generating member that has not undergone the chemical reaction.

8. The fuel cell system according to any one of claims 1 to 7,
wherein
the fuel generating member is recoverable by a reverse reaction of the chemical reaction,
the fuel cell portion has an electrolysis function of performing electrolysis of a product of the reverse function supplied from the fuel generating member when the fuel generating member is recovered, and
during the electrolysis, the circulator controlling portion controls the gas circulation amount of the circulator according to a proportion of the fuel generating member that has not undergone the reverse reaction.

9. The fuel cell system according to any one of claims 1 to 8,
wherein the fuel generating member is formed of particulates, and a base material of the particulates is a metal that generates the fuel gas by the chemical reaction.
